# EUROPEAN PATENT APPLICATION

(11) **EP 2 053 882 A1**
(43) Date of publication of application: **29.04.2009**
(21) Application number: 07020241.1
(22) Date of filing: 16.10.2007
(51) Int. Cl.: H04W 4/22, H04L 29/06, H04M 7/00

(54) **Method and device for data processing in a network and communication system comprising such device**

(71) Applicant: Nokia Siemens Networks Oy, 02610 Espoo (FI)
(72) Inventor: Wisenöcker, Richard, 1140 Wien (AT)
(74) Representative: Bruglachner, Thomas E.

(57) **Abstract**

A method and a device for data processing in a network are provided, the method comprising the step of: a broadcast message is transmitted from a first network element to a second network element, said broadcast message comprising an emergency relevant information. Further, a communication system comprising at least one such device is provided.

## Description

The invention relates to a method and to a device for data processing in a network and to a communication system comprising such a device.

Telecommunication networks provide so-called emergency services, in particular such networks shall enable a user or a terminal to launch an call in case of an emergency ("emergency call"). Such an emergency service, may be handled differently from a normal call, e.g., within a GSM network each mobile phone can establish an emergency call even if there is no SIM-card inserted in the mobile phone, i.e. without any valid subscription.

Such emergency service needs also to be provided by emerging networks employing new technologies. In particular, IP-networks enabling services like Voice-over-IP (VoIP) shall offer said emergency feature.

IP-based networks utilized for voice services employ a Session Initiation Protocol (SIP) and/or an IP Multimedia Subsystem (IMS). In order to initiate an emergency call, a (mobile) terminal of the IMS needs to locate the closest emergency center. For this purpose, an IMS client needs to contact a Proxy-Call State Control Function (P-CSCF) and/or a Serving-Call State Control Function (S-CSCF), which in return shall forward the emergency call to an emergency center.

However, in such scenario it is decisive for the terminal to get hold of the P-CSCF's IP address or of the IP address of the P-CSCF that is handling emergency calls in general (the same may apply accordingly for an S-CSCF).

Ongoing 3GPP discussions suggest conveying the P-CSCF address to the mobile terminal via Dynamic Host Configuration Protocol (DHCP). Such approach bears the disadvantage that DHCP servers are first accessible to a mobile terminal after its successful authentication and network entry, respectively. Another disadvantage stems from the fact that in some scenarios DHCP is not available or is subject to restrictions: For example, IPv6 (Internet Protocol, Version 6) networks provide a "Stateless Autoconfiguration", wherein the mobile terminal calculates an IP address based on "Router Advertisement"-messages transmitted by a IPv6 router. In MIPv4 (Mobile IP, Version 4) networks a similar scenario applies, wherein IP addresses are distributed by "Agent Advertisement"-messages.

Alternatively, it is suggested to program a static P-CSCF address into the mobile terminal. As the terminal is mobile, this approach has the disadvantage that in an emergency situation not the closest P-CSCF is being contacted.

The **problem** to be solved is to overcome the disadvantages as set forth above and in particular to provide an efficient mechanism for a mobile terminal to establish an emergency call in IP-based networks.

This problem is solved according to the features of the independent claims. Further embodiments result from the depending claims.

In order to overcome this problem, a method for data processing in a network is provided comprising the following step:
- a broadcast message is transmitted from a first network element to a second network element, said broadcast message comprising an emergency relevant information.

Hence, the emergency relevant information, in particular an address information and/or an IP address of a destination for emergency calls can be broadcast to the second network element, which may in particular be a mobile terminal (e.g., a User Equipment UE).

In an embodiment, the first network element is associated with the network.

The first network element is in particular a component within the network, e.g., a non-mobile network element. However, the first network component can comprise and/or be part of and/or be associated with a base station, in particular with a mobile base station.

In another embodiment, the second network element is a mobile terminal, in particular a User Equipment UE.

In a further embodiment, the broadcast message is repeatedly transmitted.

The broadcast message may be transmitted according to a predetermined schedule, e.g., at a given (varying) rate.

In a next embodiment, the broadcast message is transmitted to the second network element when said second network element substantially connects to the network.

Thus, the second network element receives the broadcast message that can be utilized for emergency calls in particular as soon as it connects or re-connects to the network.

It is also an embodiment that the emergency relevant information comprises an address, particularly an IP address, of a third network element. Advantageously, the third network element may be a network element of the network and it may be used, e.g., to receive and/or forward emergency calls in particular to an emergency center.

Pursuant to another embodiment, the third network element comprises and/or is associated with and/or is part of at least with one of the following:
- a Proxy-Call State Control Function P-CSCF;
- a Serving- Call State Control Function S-CSCF.

According to an additional embodiment, a fourth network element comprises a Domain Name Service (DNS), said fourth network element being in particular utilized by the second network element.

Advantageously, such DNS can be used to translate Domain Names into addresses where such DNS could even be used to (indirectly) forward requests from the MS/UE to a specific server.

Hence, all these components of the network may be used as an addressee of an emergency call in order to, e.g., forward the emergency call to the emergency center.

According to an embodiment, a Router Advertisement message is extended by said emergency relevant information.

According to another embodiment, an Agent Advertisement message is extended by said emergency relevant information.

In yet another embodiment, the method is utilized in at least one of the following networks and/or environments:
- an IPv6 and/or an MIPv6 network;
- an IPv4 and/or an MIPv4 network;
- a WiMAX environment;
- a 3GPP environment, in particular an Systems Architecture Evolution / Long Term Evolution (SAE/LTE) environment;
- a WLAN.

The problem stated above is also solved by a device for data processing in a network comprising a processor unit that is equipped and/or arranged such that the method as described herein is executable on said processor unit.

The problem stated supra is further solved by a device for data processing in a network comprising a processor unit that is arranged such that the following step is executable: A broadcast message is transmitted from a first network element to a second network element, said message comprising an emergency relevant information.

Accordingly, all steps of the method as described herein may be processed on said device.

According to an embodiment, said device is a communication device, in particular comprising and/or associated with one of the following functions or components:
- a Proxy-Call State Control Function P-CSCF;
- a Serving-Call State Control Function S-CSCF.

Further, the problem stated above may be solved by a communication system comprising the device as described herein.

Embodiments of the invention are shown and illustrated in the following figure:

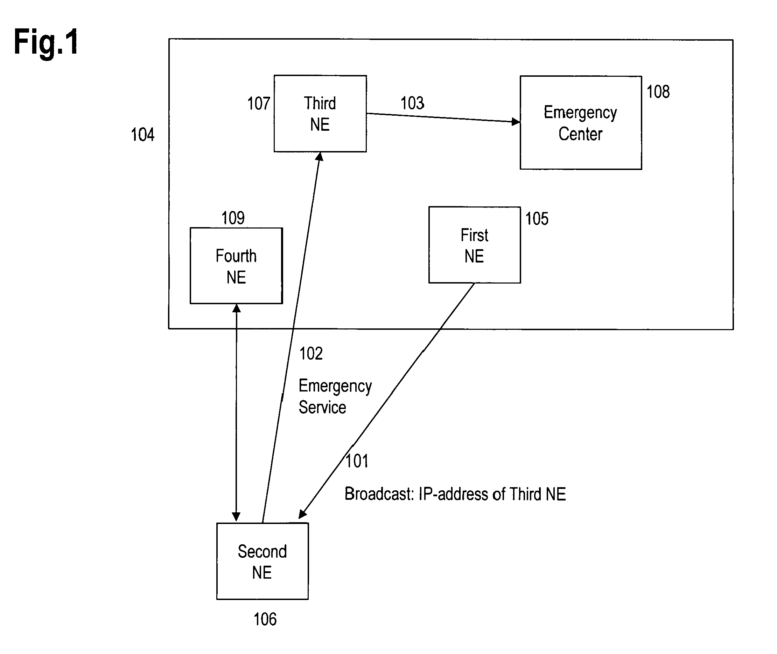

- Fig.1: shows a scenario comprising a network and a mobile terminal, wherein the mobile terminal is enabled to reach a Third NE for initiating emergency services.

The approach provided herewith suggests in particular to utilize and/or amend IETF messages as follows:
a) In IPv6/MIPv6 networks, a "Router Advertisement" message (RFC 2461) may be extended by providing a field comprising an emergency relevant information.
b) Regarding MIPv4, an "Agent Advertisement" message (RFC 2002) may be extended by providing a field comprising an emergency relevant information.

The emergency relevant information may comprise an address, in particular an IP address, of a Domain Name Server (DNS) and/or of a P-CSCF (and/or of an S-CSCF).

Hence, the emergency call can be launched by a mobile terminal even in scenarios without any DHCP service being available.

**Fig.1** shows a scenario comprising a network 104 and a Second Network Element (NE) 106 that is advantageously a mobile terminal or a User Equipment UE.

In this scenario, the Second NE 106 needs to utilize an Emergency Service 102, e.g., initiate an emergency call via the network 104.

The network 104 comprises in particular a First NE 105, a Third NE 107 and an Emergency Center 108. The First NE 105 may comprise a function that transmits a broadcast message (or broadcasts a according message) to the Second NE 106, wherein said broadcast message comprises an emergency relevant information. It is noted that such emergency relevant information may relate to various kinds of emergency services, in particular to an emergency call that may be initiated from a mobile terminal. According to Fig.1, the broadcast message 101 conveys an IP-address of the Third NE 107 and/or of a Fourth NE 109 to the Second NE 106.

The Forth NE 109 may be realized as a Domain Name Server DNS.

In case of an emergency, the Second NE 106 can launch an emergency call 102 towards the Third NE 107, in particular by utilizing the Fourth NE 109 to obtain the IP address of the Third NE 107. The Third NE 107 may forward the emergency call/request 103 to the Emergency Center 108.

The Third NE 107 may be of the following type and or comprise at least one of the following functions:
- a Proxy-Call State Control Function P-CSCF;
- a Serving- Call State Control Function S-CSCF.

### Further Advantages:

An existence of a DHCP server is not mandatory, the mobile terminal obtains the emergency relevant information by a broadcast message independently from (but maybe in addition to) any DHCP server.

Information relevant for emergency services, in particular in protected networks like commercial networks, can be provided together with configuration data already provided via basic messaging like "Router Advertisement" and/or "Agent Advertisement".

The amount of total messages to be exchanged can be significantly reduced and hence the time for registration decreases.

The approach may be provided in addition to existing DHCP solutions. This may be advantageous in order to increase an overall probability to quickly initiate an emergency call.

Also, the approach suggested may be utilized in particular in the areas of IPv6 networks, of WiMAX networks, of 3GPP-SAE/LTE scenarios and of WLAN.

## Claims

1. A method for data processing in a network comprising the following step:
- a broadcast message is transmitted from a first network element to a second network element, said broadcast message comprising an emergency relevant information.

2. The method according to claim 1, wherein the first network element is associated with the network.

3. The method according to any of the preceding claims, wherein the second network element is a mobile terminal, in particular a User Equipment.

4. The method according to any of the preceding claims, wherein the broadcast message is repeatedly transmitted.

5. The method according to any of the preceding claims, wherein the broadcast message is transmitted to the second network element when said second network element substantially connects to the network.

6. The method according to any of the preceding claims, wherein the emergency relevant information comprises an address, particular an IP address, of a third network element.

7. The method according to claim 6, wherein the third network element is a network element of the network and is used for emergency calls in particular by forwarding an emergency call request to an emergency center.

8. The method according to any of claims 6 or 7, wherein the third network element comprises and/or is associated with and/or is part of at least with one of the following:
- a Proxy-Call State Control Function P-CSCF;
- a Serving- Call State Control Function S-CSCF.

9. The method according to any of the preceding claims, wherein a fourth network element comprises a Domain Name Service (DNS), said fourth network element being in particular utilized by the second network element.

10. The method according to any of the preceding claims utilizing a Router Advertisement message extended by said emergency relevant information.

11. The method according to any of the preceding claims utilizing an Agent Advertisement message extended by said emergency relevant information.

12. The method according to any of the preceding claims utilized in at least one of the following networks and/or environments:
- an IPv6 and/or an MIPv6 network;
- an IPv4 and/or an MIPv4 network;
- a WiMAX environment;
- a 3GPP environment, in particular an SAE/LTE environment;
- a WLAN.

13. A device for data processing in a network comprising a processor unit that is arranged such that the method according of any of the preceding claims is executable on said processor unit.

14. A device for data processing in a network comprising a processor unit that is arranged such that the following step is executable:
- a broadcast message is transmitted from a first network element to a second network element, said message comprising an emergency relevant information.

15. The device according to any of claims 13 or 14, wherein said device is a communication device, in particular comprising and/or associated with one of the following functions or components:
- a Proxy-Call State Control Function P-CSCF;
- a Serving- Call State Control Function S-CSCF;
- a Domain Name Server DNS.

16. Communication system comprising the device according to any of claims 13 to 15.
